# FASCICULE DE BREVET EUROPEEN

(11) **EP 2 655 145 B1**
(45) Date de publication et mention de la délivrance du brevet: **16.03.2016**
(21) Numéro de dépôt: 11791570.2
(22) Date de dépôt: 07.12.2011
(51) Int. Cl.: B60T 11/16, B60T 11/18

(54) **PISTON PRIMAIRE PLASTIQUE A INSERT FONCTIONNEL POUR MAÎTRE-CYLINDRE TANDEM A PENETRATION ET MAÎTRE-CYLINDRE MUNI D'UN TEL PISTON**
KUNSTSTOFFPRIMÄRZYLINDER MIT FUNKTIONSEINSATZ FÜR VERDRÄNGUNGSTANDEMHAUPTZYLINDER UND MIT EINEM SOLCHEN KOLBEN BESTÜCKTER HAUPTZYLINDER
PLASTIC PRIMARY PISTON WITH FUNCTIONAL INSERT FOR PENETRATING TANDEM MASTER-CYLINDER AND MASTER CYLINDER EQUIPPED WITH SUCH A PISTON

(30) Priorité: 21.12.2010 FR 1005011
(43) Date de publication de la demande: 30.10.2013
(73) Titulaire: Robert Bosch GmbH, 70442 Stuttgart (DE)
(72) Inventeur: BERNADAT, Olivier, F-94170 Le Perreux (FR); LHUILLIER, Laurent, F-93150 Le Blanc Mesnil (FR); GRECH, Daniel, F-60260 Lamorlaye (FR); RODRIGUEZ, Marc, F-95280 Jouy le Moutier (FR)
(86) Numéro de dépôt international: PCT/EP2011/072038
(87) Numéro de publication internationale: WO 2012/084513

(56) Documents cités:
- WO-A1-88/08801
- US-A- 5 617 725
- US-B2- 6 886 333

## Description

### Domaine de l'invention

L'invention se rapporte à un piston primaire de maître cylindre d'un véhicule automobile et aux maîtres cylindres de véhicule muni d'un tel piston.

### Etat de la technique

Les maîtres cylindres connus dans l'état de technique comportent un piston primaire et un piston secondaire généralement réalisés en aluminium et montés tous deux en série dans un alésage axial d'un corps de maître cylindre de frein, généralement réalisé en aluminium et usiné. De tel maitre cylindre sont décrit dans le document FR 2 827 244. Une tige de poussée permet d'actionner le déplacement du piston primaire. Le piston primaire a pour rôle de mettre sous pression une chambre de pression primaire et un piston secondaire à pour rôle de mettre sous pression une chambre de pression secondaire. Des ressorts primaire et secondaire ont tendance à repousser les pistons dans le sens inverse du déplacement assurant la monté en pression.

L'alésage du maître cylindre est alimenté en liquide de frein par deux trous d'accès d'alimentation qui sont raccordés à un réservoir de liquide frein. Les trous d'accès d'alimentation permettent d'alimenter les chambres de pression primaire et secondaire. Ces trous débouchent dans des chambres annulaires, des joints d'étanchéité annulaires appelés « coupelles » sont prévus de part et d'autre des chambres annulaires.

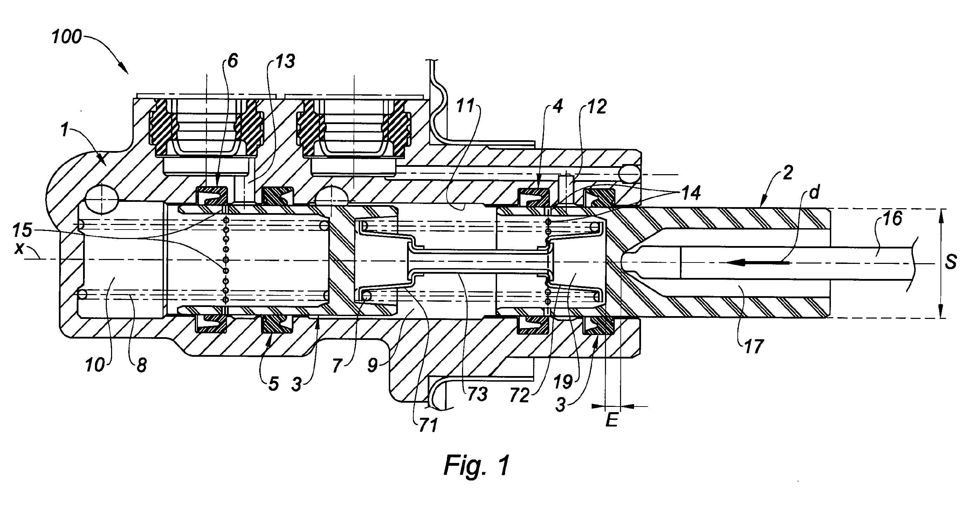

L'alimentation des chambres de pression en liquide de frein se fait lorsque les pistons sont au repos. Les pistons sont alors dans la position représentée figure 1. L'alimentation se fait par l'intermédiaire des passages prévus dans les parois des pistons et qui font alors communiquer les trous d'accès d'alimentation et les chambres annulaires avec l'intérieur des pistons primaire et secondaire donnants respectivement dans les chambres de pression primaire et secondaire. Lorsque les pistons sont mus axialement vers l'avant (sens de la flèche D sur la figure 1) les passages des pistons franchissent les joints d'étanchéités pour isoler les chambres d'alimentations et ainsi permettre l'établissement d'une pression de freinage dans les chambres de pression primaire et secondaire.

L'ensemble du maître cylindre est susceptible d'être monté sur un servomoteur d'assistance au freinage.

Lorsque les pistons sont déplacés selon le sens de la flèche D par une tige de poussée qui exerce un appui ponctuel sur le piston primaire. La coupelle 4 isole la chambre de pression primaire du trou d'accès d'alimentation primaire et la coupelle 6 isole la chambre de pression secondaire du trou d'accès d'alimentation. Lorsque l'effort sur la tige de poussée est relâché le volume de liquide frein accumulé dans les freins et les ressorts du maitre cylindre repoussent les pistons en position repos. Il peut arriver, que lors d'un relâché rapide de la tige de poussée que le liquide de frein contenu dans les chambres de pression du maitre cylindre passe en dessous de la pression atmosphérique, dû à l'action des ressorts qui repoussent les pistons plus vite que la capacité de passage de liquide du frein dans le maitre cylindre. Au moment où les pistons arrivent en position repos, les communications entre le réservoir à pression atmosphérique et chambres du maitre cylindre s'ouvrent de manière direct, il se produit alors un passage de liquide frein brutal, qui génère du bruit dans le maitre cylindre appelé « fluid hammer ». Afin d'améliorer les performances des maitres cylindres il est nécessaire de prévoir des formes particuliers sur les pistons des maitres cylindres en aluminium, ces formes peuvent entrainer des surcouts important dû à leurs complexité de réalisation. Le document US 5,617,725 décrit un maître-cylindre avec un piston primaire en matière plastique moulé et muni d'un insert métallique dans une cavité de reception de la tige de poussée.

### But de l'invention

La présente invention a pour but de d'offrir un piston primaire en plastique simple à réaliser, économique et capable de résister aux contraintes mécaniques pour un maitre cylindre.

### Exposé et avantages de l'invention

L'invention a principalement pour objet un piston de maître cylindre monté dans un maitre cylindre de frein du type défini ci-dessus, comprenant au moins le piston primaire et un piston secondaire montés dans un alésage du maître cylindre. Ces pistons permettent de créer une pression, respectivement dans une chambre de pression primaire et dans une chambre de pression secondaire, sous l'action d'une tige de poussée sur le piston primaire caractérisé en ce que le piston primaire est en matière plastique moulé et muni d'un insert métallique, situé dans une cavité de réception de la tige de poussée où la tige de poussée exerce une force pour déplacer le piston primaire et que le dit insert possède une forme spécifique permettant d'accueillir d'une par la tige poussée et d'autre part une forme extérieure permettant son maintien dans cavité de réception de la tige de poussée et en ce que le piston est réalisé de manière préférentiel dans un plastique thermodurcissable également appelé thermosets et de manière encore plus préférentiel en résine phénolique chargé avec des fibres de verre. La forme spécifique et la dureté du dit insert en permet d'accueillir d'une part la tige poussée et de résister au matage tige de poussée dû application de freinage. L'insert métallique confère au piton primaire une résistance mécanique augmenté et permet de réduire les épaisseurs de matières plastiques et de rendre le piston primaire plus compact.

Une autre caractéristique avantageuse, est que le corps du piston primaire se réalise facilement par moulage par injection cela permet la réalisation de formes complexe tel que: Des rainures, nervures, trous non cylindriques.

Suivant une autre caractéristique avantageuse, le corps du piston se réalise facilement par moulage par injection et le piston primaire sortant du moule est prêt au montage sans nécessiter de travail de finition contrairement au piston en aluminium qui nécessite une reprise d'usinage.

Suivant une autre caractéristique avantageuse, le corps du piston se réalise facilement par moulage des matières plastiques thermodurcissables qui permettent une rectification de surface par usinage afin d'améliorer la fiabilité du maitre cylindre.

Suivant une autre caractéristique avantageuse, le corps du piston se réalise facilement par moulage par injection de matières plastiques qui permettent l'amortissement des bruits engendrer par le liquide de frein.

Suivant une autre caractéristique avantageuse l'insert est réalisée dans une matière magnétisable afin que le piston émette un champ magnétique capable d'être détecté par un capteur de champs magnétique

Suivant une autre caractéristique avantageuse l'insert métallique possède sur sa forme extérieure au moins une excroissance de dimension légèrement supérieure à sa forme extérieure pour une insertion à force dans le fond de la cavité de réception de la tige de poussée.

L'épaisseur de l'insert est déterminé pour résisté a une pression d'épreuve du maitre cylindre de 40 MPa, cette épaisseur prend en compte le diamètre du piston primaire et la section d'appuis de la tige de poussée.

Les différents objets et caractéristiques de l'invention apparaîtront plus clairement dans la description et dans les figures annexées qui représentent:
- la figure 1, est une vue en coupe axiale un maître cylindre connu dans l'état de la technique et décrit précédemment,
- la figure 2, est une vue isométrique avec arraché partiel d'un exemple de réalisation de piston d'un maître cylindre selon l'invention avec des rainures situées à l'avant du piston,
- la figure 3, est une vue partielle en coupe axiale d'un exemple de réalisation d'une partie d'un maître cylindre selon l'invention.

Sur la figure 1, on retrouve donc un maître cylindre de frein 100 possédant un alésage 11 dans lequel ont été placés un piston primaire 2 et un piston secondaire 3 et des ressorts primaire 7 et secondaire 8. Les pistons 2 et 3 on pour rôle de mettre sous pression des chambres de pression primaire 9 et secondaire 10 respectivement. Des deux trous d'accès d'alimentation en liquide de frein 12 et 13 qui sont destinés à être raccordés à un réservoir de liquide de frein, non représenté. De part et d'autre d'un trou d'accès 12 sont prévues des coupelles 3 et 4 et de part et d'autre d'un trou d'accès 13 sont prévues des coupelles 5 et 6. Lorsque le maître cylindre est au repos, le piston primaire est dans la position représentée sur la figure 1. Les parois extérieur des pistons munis de passage 14 et 15 et font communiquer les trous 12 et 13 avec l'intérieur du piston et la chambres de pression primaire 9 et la chambre de pression secondaire 8. Au repos les coupelles 4 et 6 permettent la communication entre les trous d'accès 12 et 13 les chambres de pression primaire et secondaire 9 et 8 sont donc alimentées en liquide de frein.

Lorsque, sous l'effet d'une force de freinage exercée suivant le sens D par une tige de poussée 16 placé dans une cavité 17 du piston primaire 2. Le piston primaire 2 est déplacé selon le sens de la flèche D, la coupelle 6 obture les passages 15 puis la coupelle 4 obture les passages 14. Les chambres de pression primaire et secondaire étant isolées des trous 12 et 13 une pression s'établit dans les chambres 9 et 10 cette pression est proportionnelle à l'effort exercé suivant le sens D par la tige de poussée 16 placé dans la cavité 17 du piston primaire 2. Le diamètre extérieur S du piston primaire 2 forme une section sur le laquelle la pression le la chambre primaire agit. Dans la cavité 17 du piston primaire la tige de poussée 16 applique un effort pour générer une pression dans le maitre cylindre, mais sur un diamètre nettement inferieur, au minimum 4 fois. Ce qui provoque des contraintes importantes au niveau du piston primaire et nécessite une épaisseur minimum de matière E entre la cavité de réception de la tige de poussée 17 et la cavité avant 19 où se trouve un pack ressort primaire, composé de deux embouts de ressort 71 72, d'une tige 73 et du ressort primaire.

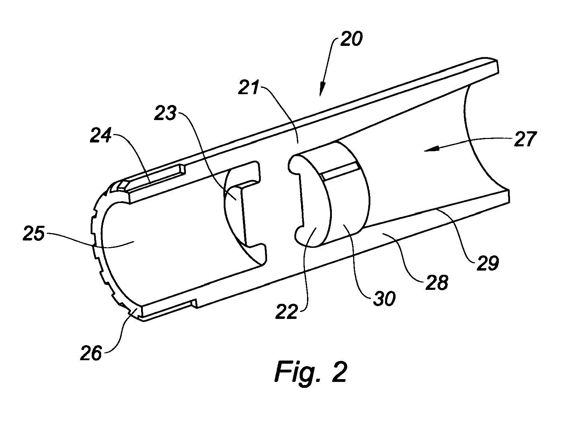

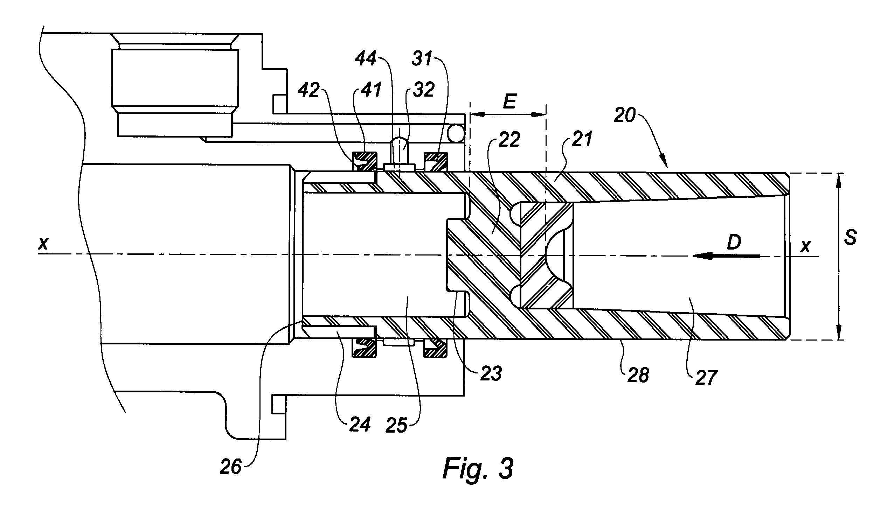

Sur les figures 2 et 3, on peut voir un piston primaire de maitre cylindre selon l'invention caractérisé en ce que le piston primaire 20 est en matière plastique moulé et muni d'un insert métallique 22 en situé à l'arrière d'une cavité avant 25 du piston primaire et dans une cavité de réception d'une tige de poussée 27 où la tige de poussée exerce une force pour déplacer le piston primaire et générer une pression dans le maitre cylindre et que le piston 20 possède au moins une rainure 24 et que le dit insert possède une forme de calotte sphérique permettant d'accueillir la tige poussée et d'autre part une forme extérieure permettant son maintien dans la cavité de réception de la tige de poussée 27. La dureté du dit insert 22 permet d'accueillir d'une part la tige poussée et de résister au matage de la tige de poussée dû aux applications de freinage.

Les rainures 24 sont de longueur suffisante pour que quand le maitre cylindre est au repos les rainures laissent passer le liquide de frein sous un point d'étanchéité 42 d'une coupelle 41 et débouche dans une chambre annulaire 44 située entre des coupelles 31 et 41. Ces rainures 24 forment des passages entre la chambre de pression et la chambre annulaire relié au réservoir, non représenté, par le trou 32. On aurait pu envisager de réaliser ces rainures 24 dans l'aluminium, mais cette réalisation aurait entrainée des surcoûts importants. L'utilisation de matières plastiques permet de réduire les coûts en prévoyant les formes des rainures dans le moule. L'utilisation de ces mêmes matières plastiques obligent à augmenté les épaisseurs et à utiliser plus matière pour palier à la différence de résistance mécanique des matériaux. Le corps plastique et l'insert métallique confère au piton primaire une résistance mécanique augmentée et permet de réduire l'épaisseur matières plastiques E et rendre le piston 20 plus compact et donc l'invention permet avec la mise en place de l'insert entre la cavité avant 25 et la cavité de réception de la tige de poussée 27, d'avoir les avantages de la résistance mécanique de l'aluminium et la facilité de fabrication des formes complexe tel que des rainure avec l'utilisation de matières plastique qui peuvent être moulées. De plus cette compacité ainsi obtenue sur piston primaire permet au maitre cylindre d'être aussi plus compact et de faire des économies sur les matériaux du maitre cylindre.

Une autre caractéristique avantageuse, est qu'un corps 21 du piston 20 se fabrique facilement par moulage par injection cela permet la réalisation de formes complexe tel que les rainures 24.

Suivant une autre caractéristique avantageuse, le corps du piston se fabrique facilement par moulage des matières plastiques thermodurcissables qui permettent une rectification d'une surface 28 par usinage afin d'améliorer la fiabilité du maitre cylindre.

Suivant une autre caractéristique l'insert métallique 22 présente sur sa surface extérieur 30 moins une excroissance de dimension légèrement supérieur à sa forme extérieur pour une insertion à force dans le fond de la cavité de réception de la tige de poussée et coopérant avec la surface intérieur 29 de la cavité 27.

Suivant une autre caractéristique l'insert métallique 22 présente sur sa surface extérieure 30 des irrégularités d'ancrages coopérant avec la surface intérieure 29 de la cavité 27.

Suivant une autre caractéristique avantageuse, l'insert 22 est cylindrique et présente sur sa surface extérieure 30 au moins une nervure coopérant avec la surface intérieure 29 de la cavité 27.

Une autre caractéristique avantageuse est que le maitre cylindre comporte le piston primaire (20) et comporte l'insert (22) réalisée dans une matière magnétisable, afin que le piston émette un champ magnétique capable d'être détecté par un capteur de champs magnétique.

### NOMENCLATURE DES ELEMENTS PRINCIPAUX

1 corps
2 piston primaire
3 piston secondaire
4 coupelle
5 coupelle
6 coupelle
7 ressort
8 ressort
9 chambre de pression secondaire
10 chambre de pression primaire
11 alésage
12 trou
13 trou
14 rainures
15 trous
16 tige de poussée
17 cavité du piston primaire
18 coupelle
19 cavité avant
20 piston primaire selon l'invention
21 corps de piston
22 insert
23 centreur de ressort
24 rainure
25 cavité avant
26 face avant du piston
27 cavité de réception de la tige de poussée
28 surface du piston
29 surface intérieur de la cavité
30 surface exterieur de l'insert
31 coupelle
32 trou
41 coupelle
42 point d'étanchéité
44 chambre annulaire 71 embout de pack de ressort primaire
72 embout de pack de ressort primaire
73 tige de pack ressort primaire
100 maître-cylindre tandem
E épaisseur de matière entre les deux cavités
S diamètre de piston
X axe du maitre cylindre

## Revendications

1. Piston primaire de maître cylindre tandem a pénétration de frein, **caractérisé en ce que** le piston primaire (20) est en matière plastique moulé et muni d'un insert métallique (22) situé à l'arrière d'une cavité avant (25) du piston primaire et dans une cavité de réception de la tige de poussée (27) où une tige de poussée exerce une force pour déplacer le piston primaire et générer une pression dans le maitre cylindre **caractérisé en ce que** le piston possède au moins une rainure (24) et que le dit insert possède une forme de calotte sphérique permettant d'accueillir la tige poussée et que l'insert métallique (22) possède sur sa forme extérieure au moins une excroissance de dimension légèrement supérieure à sa forme extérieure pour une insertion à force dans le fond de la cavité de réception de la tige de poussée.

2. Piston primaire selon la revendication 1, **caractérisé en ce que** piston primaire (20) est réalisé dans en une matière plastique thermodurcissable.

3. Piston primaire selon les revendications 1 et 2 **caractérisé en ce que** la surface (28) du piston (20) est rectifiée par usinage.

4. Piston primaire selon la revendication 1 **caractérisé en ce que** le piston primaire (20) est réalisé en matières plastiques qui permettent l'amortissement des bruits.

5. Piston primaire selon la revendication 1 **caractérisé en ce que** l'insert métallique (22) présente sur sa surface extérieure (30) des irrégularités d'ancrages coopérant avec la surface intérieure (29) de la cavité (27).

6. Piston primaire selon la revendication 1 **caractérisé en ce que** l'insert métallique (22) est cylindrique et présente sur sa surface extérieure (30) au moins une nervure coopérant avec la surface intérieure (29) de la cavité (27) .

7. Maitre cylindre comprenant au moins un piston primaire et un piston secondaire montés dans un alésage du maître cylindre **caractérisé en ce que** le piston primaire (20) est en matière plastique moulé et muni d'un insert métallique, situé dans la cavité de réception de la tige de poussée où la tige de poussée exerce une force pour déplacer le piston primaire et la chambre de pression primaire et que le dit insert possède une forme spécifique permettant d'accueillir d'une part la tige de poussée et d'autre part sur sa forme extérieure une excroissance de dimension légèrement supérieure à sa forme extérieure pour une insertion à force dans le fond de la cavité de réception de la tige de poussée.

8. Maitre cylindre selon la revendication 8 **caractérisé en ce que** le piston primaire (20) comporte l'insert (22) réalisée dans une matière magnétisable, afin que le piston émette un champ magnétique capable d'être détecté par un capteur de champs magnétique.

## Patentansprüche

1. Primärkolben eines Tandem-Hauptbremszylinders vom Durchdringungstyp, **dadurch gekennzeichnet, dass** der Primärkolben (20) aus geformtem Kunststoffmaterial ist und mit einem Metalleinsatz (22) ausgestattet ist, der an der Rückseite eines vorderen Hohlraums (25) des Primärkolbens und in einem Hohlraum zur Aufnahme des Druckstößels (27) angeordnet ist, wo ein Druckstößel eine Kraft ausübt, um den Primärkolben zu verschieben und einen Druck in dem Hauptzylinder zu erzeugen, **dadurch gekennzeichnet, dass** der Kolben mindestens eine Nut (24) aufweist und dass der Einsatz eine kugelkalottenförmige Form aufweist, die es ermöglicht, den Druckstößel aufzunehmen und dass der Metalleinsatz (22) auf seiner äußeren Form mindestens einen Vorsprung von einer Abmessung, die etwas größer als seine äußere Form ist, zum Einfügen mit Kraft in den Boden des Hohlraums zur Aufnahme des Druckstößels aufweist.

2. Primärkolben nach Anspruch 1, **dadurch gekennzeichnet, dass** der Primärkolben (20) aus einem thermisch erhärtenden Kunststoff erstellt ist.

3. Primärkolben nach den Ansprüchen 1 und 2, **dadurch gekennzeichnet, dass** die Oberfläche (28) des Kolbens (20) durch Bearbeitung geschliffen ist.

4. Primärkolben nach Anspruch 1, **dadurch gekennzeichnet, dass** der Primärkolben (20) aus Kunststoffen erstellt ist, die die Dämpfung der Geräusche ermöglichen.

5. Primärkolben nach Anspruch 1, **dadurch gekennzeichnet, dass** der Metalleinsatz (22) auf seiner Außenfläche (30) Unregelmäßigkeiten zur Verankerung aufweist, die mit der Innenfläche (29) des Hohlraums (27) zusammenwirken.

6. Primärkolben nach Anspruch 1, **dadurch gekennzeichnet, dass** der Metalleinsatz (22) zylindrisch ist und auf seiner Außenfläche (30) mindestens eine Rippe aufweist, die mit der Innenfläche (29) des Hohlraums (27) zusammenwirkt.

7. Hauptzylinder, umfassend mindestens einen Primärkolben und einen Sekundärkolben, die in einer Bohrung des Hauptzylinders angeordnet sind, **dadurch gekennzeichnet, dass** der Primärkolben (20) aus geformtem Kunststoffmaterial ist und mit einem Metalleinsatz ausgestattet ist, der in dem Hohlraum zur Aufnahme des Druckstößels angeordnet ist, wo der Druckstößel eine Kraft ausübt, um den Primärkolben und die Primärdruckkammer zu verschieben und dass der Einsatz eine spezifische Form, die es ermöglicht, einerseits den Druckstößel aufzunehmen, und andererseits an seiner äußeren Form einen Vorsprung von einer Abmessung, die etwas größer als seine äußere Form ist, zu einem Einfügen mit Kraft in den Boden des Hohlraums zur Aufnahme des Druckstößels aufweist.

8. Hauptzylinder nach Anspruch 8, **dadurch gekennzeichnet, dass** der Primärkolben (20) den Einsatz (22) aufweist, der aus einem magnetisierbaren Material erstellt ist, damit der Kolben ein Magnetfeld emittiert, das von einem Magnetfeldsensor detektiert werden kann.

## Claims

1. Primary piston for a penetration-type tandem master cylinder of a brake, **characterized in that** the primary piston (20) is made of moulded plastic and provided with a metal insert (22) situated to the rear of a front cavity (25) of the primary piston and in a cavity for receiving the push rod (27) where a push rod exerts a force to move the primary piston and generate a pressure in the master cylinder, **characterized in that** the piston has at least one groove (24), and **in that** the said insert has a spherical cap shape making it possible to accommodate the push rod, and **in that** the metal insert (22) has on its outer shape at least one protrusion with a slightly greater dimension than its outer shape for a force fit in the bottom of the cavity for receiving the push rod.

2. Primary piston according to Claim 1, **characterized in that** the primary piston (20) is made of a thermoset plastic.

3. Primary piston according to Claims 1 and 2, characterized that the surface (28) of the piston (20) is ground by machining.

4. Primary piston according to Claim 1, **characterized in that** the primary piston (20) is made of plastics which allow damping of noise.

5. Primary piston according to Claim 1, **characterized in that** the metal insert (22) has on its outer surface (30) anchoring irregularities cooperating with the inner surface (29) of the cavity (27).

6. Primary piston according to Claim 1, **characterized in that** the metal insert (22) is cylindrical and has on its outer surface (30) at least one rib cooperating with the inner surface (29) of the cavity (27).

7. Master cylinder comprising at least one primary piston and one secondary piston which are mounted in a bore of the master cylinder, **characterized in that** the primary piston (20) is made of moulded plastic and provided with a metal insert situated in the cavity for receiving the push rod where the push rod exerts a force to move the primary piston and the primary pressure chamber, and **in that** the said insert has a specific shape making it possible to accommodate, on the one hand, the push rod and, on the other hand, on its outer shape, a protrusion with a slightly greater dimension than its outer shape for a force fit in the bottom of the cavity for receiving the push rod.

8. Master cylinder according to Claim 8, **characterized in that** the primary piston (20) comprises the insert (22) made of a magnetisable material in order that the piston emits a magnetic field capable of being detected by a magnetic field sensor.
